# EUROPÄISCHE PATENTANMELDUNG

(11) **EP 4 597 264 A1**
(43) Veröffentlichungstag der Anmeldung: **06.08.2025**
(21) Anmeldenummer: 24154737.1
(22) Anmeldetag: 30.01.2024
(51) Int. Cl.: G06F 3/01, G02B 27/01

(54) **DARSTELLUNG VIRTUELLER OBJEKTE DURCH XR-EINRICHTUNG BEI NUTZUNG IN EINEM FAHRZEUG**

(71) Anmelder: Deutsche Telekom AG, 53113 Bonn (DE)
(72) Erfinder: SPEICH, Jan, 53757 Sankt Augustin (DE); SCHRAGE, Elmar, 53347 Alfter (DE)
(74) Vertreter: Maucher Jenkins Patent- und Rechtsanwälte

(57) **Zusammenfassung**

Gegenstand der Erfindung ist die Verbesserung der Darstellung mindestens eines virtuellen Objekts (3) durch eine von einem Nutzer (6) in einem sich bewegenden Fahrzeug (4) genutzte mobile XR-Einrichtung (1), wie eine XR-Brille, indem ein durch die XR-Einrichtung (1) visualisiertes virtuelles Objekt (3) hinsichtlich seiner Pose mithilfe eines Lokalisierungsalgorithmus (z. B: SLAM) stabilisiert wird. Dazu werden als Eingangsgrößen für den Lokalisierungsalgorithmus neben den durch eine interne IMU-Sensorkomponente (2) der XR-Einrichtung (1) erfassten, Bewegungszustände der Darstellungsfläche beschreibenden Messdaten zusätzlich korrespondierende Messdaten zu Bewegungszuständen des Fahrzeugs (4) verwendet, welche mittels mindestens einer externen, temporär oder permanent in dem Fahrzeug (4) fixierten IMU-Sensoreinrichtung (5) erfasst und an die XR-Einrichtung (1) übertragen werden. Durch eine von der XR Einrichtung (1) verarbeitete Programmanwendung erfolgt beim Start des Lokalisierungsalgorithmus eine Differenzbildung zwischen den Messdaten der IMU-Sensorkomponente (2) der XR Einrichtung (1) und den Messdaten der mindestens einen externen IMU-Sensoreinrichtung (5), wodurch das virtuelle Objekt (3) gegenüber dem Fahrzeug (4) hinsichtlich seiner relativen Position und relativen Lage stabilisiert wird.

## Beschreibung

Die Erfindung betrifft eine Lösung zur Darstellung virtueller Objekte durch eine XR-Einrichtung bei deren Nutzung in einem Fahrzeug, nämlich genauer gesagt in einem sich bewegenden Fahrzeug. Sie bezieht sich hierbei auf die Verbesserung der Darstellung eines entsprechenden virtuellen Objekts, indem dieses bei seiner Visualisierung durch die XR-Einrichtung hinsichtlich seiner sogenannten Pose, das heißt seiner Position und Lage, stabilisiert wird.

Bei der XR-Einrichtung handelt es sich typischerweise um eine XR-Brille, das heißt um eine VR-Brille (mit VR = Virtual Reality), um eine AR-Brille (mit AR = Augmented Reality) oder um eine MR-Brille (mit MR = Mixed Reality). Demnach wird der Vorsatz "XR" in den nachfolgenden Darstellungen und in den Patentansprüchen als Oberbegriff für die zuvor bezeichneten Techniken (VR, AR, MR) bezeichnet, bei denen es darum geht, dem Nutzer einer entsprechenden Einrichtung, also beispielsweise einer elektronischen Brille, auf einer dafür geeigneten Darstellungsfläche eine ausschließlich virtuelle Realität (VR), eine um virtuelle Elemente erweiterte Realität (AR) oder einen Mix aus beiden (MR) zu präsentieren.

Soweit vorstehend in Bezug auf die XR-Einrichtung bereits elektronische Brillen angesprochen wurden, ist an dieser Stelle anzumerken, dass derartige Brillen entsprechend dem derzeitigen Stand der Technik im Allgemeinen noch zusammen mit einem Companion Device, wie beispielsweise einem Smartphone oder einem Tablet-PC, betrieben werden, durch dessen Zentralverarbeitungseinheit (CPU) die zur Visualisierung virtueller Objekte erforderlichen Berechnungen ausgeführt werden. Jedoch gibt es bereits auch elektronische Brillen, welche selbst mit entsprechend leistungsfähiger Hardware ausgestattet sind und dementsprechend auch solitär, ohne Companion Device verwendet werden können.

Ungeachtet dessen kann sich jedoch die nachfolgend vorgestellte Lösung auch auf ein Smartphone oder einen Tablet-PC selbst beziehen, auf dessen Display entsprechende virtuelle Inhalte dargeboten werden, so dass das Smartphone oder der Tablet-PC als XR-Einrichtung fungiert. Dies ist auch der Grund, warum im Kontext der Beschreibung und der beanspruchten Lösung verallgemeinernd von einer XR-Einrichtung gesprochen wird und dieser Begriff insoweit unterschiedlichste denkbare Konstellationen, wie solitär genutzte elektronische Brillen, mit einem Companion Device genutzte elektronische Brillen und auch ohne solche Brillen genutzte mobile computerbasierte Endgeräte umfasst. Folglich ist die schon angesprochene Darstellungsfläche entweder an den Innenseiten der Gläser einer elektronischen Brille angeordnet oder es handelt bei der Darstellungsfläche um ein respektive um das Display eines ohne eine solche Brille verwendeten mobilen Endgeräts. Gegenstände der Erfindung sind ein Verfahren und ein zu dessen Durchführung geeignetes System mit einer XR-Einrichtung. Im Fall der XR-Brille gibt es unterschiedliche Möglichkeiten, das mindestens eine Objekt an den Innenseiten der Gläser einer solchen Brille für den Nutzer zu visualisieren. Eine besteht dabei darin, dass die dem die XR-Brille tragenden Nutzer zugewandten Innenseiten der Brillengläser selbst unmittelbar die Darstellungsfläche ausbilden.

Bei der Darstellung virtueller Objekte, sei es nun an den Gläsern einer elektronischen Brille oder auf dem Display eines Geräts, besteht eine grundsätzliche Möglichkeit darin, ein solches virtuelles Objekt in Bezug auf die Darstellungsfläche absolut zu fixieren, dieses also ungeachtet eventueller durch die Darstellungsfläche ausgeführter Bewegungen an einer festen Position der Darstellungsfläche anzuzeigen. Der tatsächlichen Realität kommt es jedoch näher, wenn das virtuelle Objekt hinsichtlich seiner Position und Lage im Raum stabilisiert wird, sich also dessen Position auf der Darstellungsfläche entsprechend direkt durch den Nutzer der XR-Vorrichtung verursachter Bewegungen der Darstellungsfläche verändert. Dies meint zum Beispiel, dass sich das virtuelle Objekt, vergleichbar mit der tatsächlichen Realität, gegebenenfalls auch aus dem Blickfeld des Nutzers beispielsweise einer XR-Brille herausbewegt, wenn dieser die Darstellungsfläche respektive die Gläser der elektronischen Brille zum Beispiel durch Drehen seines Kopfes hinreichend weit aus ihrer ursprünglich bei der Einblendung des virtuellen Objekts eingenommenen Lage herausbewegt.

Hierfür ist es jedoch erforderlich, eine solche Bewegung der Darstellungsfläche sensorisch zu erfassen und anhand der dabei gewonnenen Bewegungsdaten die Position, an welcher das Objekt auf der Darstellungsfläche jeweils dargestellt wird, permanent neu zu berechnen, das heißt an die Bewegungen der Darstellungsfläche anzupassen. Dies geschieht durch die Nutzung einer IMU (Inertial Measurement Unit), das heißt einer sensorischen, mit der Darstellungsfläche fix verkoppelten Sensoreinheit. Im Zusammenhang mit derartigen Einheiten wird gelegentlich auch von IMU-Sensoren gesprochen, wobei die Einheiten aber typischerweise eine Kombination von mehreren Sensoren zur Erfassung von auftretenden Beschleunigungen, zur Messung von Winkelgeschwindigkeiten und gegebenenfalls von spezifischen Kräften umfassen.

Mit Hilfe der IMU wird die Darstellungsfläche gewissermaßen hinsichtlich ihres Bewegungsverhaltens getrackt, wodurch es dann möglich ist, ein auf dieser dargestelltes virtuelles Objekt hinsichtlich seiner Position und Ausrichtung angepasst an dieses Bewegungsverhalten darzustellen. Es werden also fortwährend die Position und Lage des virtuellen Objekts relativ zur Darstellungsfläche der XR-Einrichtung (beispielsweise Darstellungsfläche einer XR-Brille) neu berechnet, damit das virtuelle Objekt an der richtigen absoluten Position auf der Darstellungsfläche und in der korrekten Ansicht respektive in der richtigen Ausrichtung dargestellt werden kann.

Allerdings gibt es Nutzungssituationen, in denen eine solchermaßen erfolgende Stabilisierung der Pose eines virtuellen Objekts nur eingeschränkt oder im ungünstigsten Fall im Grunde gar nicht mehr funktioniert. Dies ist beispielsweise dann gegeben, wenn die XR-Einrichtung in einem sich bewegenden Fahrzeug genutzt wird. Mit Bezug auf eine XR-Brille kann das System dann nicht mehr unterscheiden, ob es durch den Nutzer, also beispielsweise durch eine die XR-Brille tragende, den Kopf drehende Person, oder dadurch bewegt wird, dass das Fahrzeug beschleunigt wird oder eine Richtungsänderung vollzieht. Ursächlich dafür ist, dass die IMU der XR-Einrichtung absolute Größen misst, wie insbesondere die Beschleunigung und die Winkelgeschwindigkeit, hierdurch aber nicht in der Lage ist, relative Bewegungen zwischen der XR-Einrichtung und dem Fahrzeug zu erkennen und auszuwerten.

Aufgabe der Erfindung ist es, eine Lösung für das zuletzt angesprochene Problem anzugeben, also die Darstellung virtueller Objekte durch eine XR-Einrichtung bei deren Benutzung in einem sich bewegenden Fahrzeug zu verbessern. Hierzu sind ein Verfahren anzugeben und ein zur Durchführung dieses Verfahrens geeignetes System bereitzustellen.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert.

Auch gemäß dem zur Lösung der Aufgabe vorgeschlagenen Verfahren wird ein durch eine XR-Einrichtung visualisiertes virtuelles Objekt hinsichtlich seiner absoluten Position und Lage im Raum stabilisiert. Dies geschieht, wie grundsätzlich bekannt, mittels einer durch die XR-Einrichtung verarbeiteten Programmanwendung. Durch diese wird ein der Stabilisierung der Position und Lage des an der Darstellungsfläche visualisierten Objekts dienender Lokalisierungsalgorithmus abgearbeitet. Hierbei kann es sich um einen SLAM-Algorithmus handeln, das heißt um einen Simultaneous Localization and Mapping Algorithm, wie er beispielsweise häufig bei mit mindestens einer Kamera ausgestatteten elektronischen Brillen zum Einsatz kommt. Das mindestens eine virtuelle Objekt wird also hinsichtlich seiner Position und Lage im Raum stabilisiert, wobei dazu seine Position und Lage relativ zur der Darstellungsfläche fortwährend neu berechnet werden.

Eingangsgrößen für diesen Algorithmus bilden (unter anderem) fortlaufend mittels einer IMU-Sensorkomponente (IMU = Inertial Measurement Unit) der XR-Einrichtung erfasste Messdaten, welche Bewegungszustände der Darstellungsfläche der XR-Einrichtung beschreiben. Bei der vorgenannten IMU-Sensorkomponente handelt es sich also um eine als fester Bestandteil der XR-Einrichtung ausgebildete Komponente, welche starr mit der jeweiligen Darstellungsfläche der XR-Einrichtung gekoppelt ist.

Das Verfahren ist nun so ausgestaltet, dass mittels mindestens einer gegenüber der XR-Einrichtung externen, temporär oder permanent in dem Fahrzeug fixierten IMU-Sensoreinrichtung korrespondierende Messdaten zu Bewegungszuständen des Fahrzeugs erfasst und zusätzlich als Eingangsgrößen für den von der XR-Einrichtung verarbeiteten Lokalisierungsalgorithmus verwendet werden. Hierzu werden die von der mindestens einen externen IMU-Sensoreinrichtung zur Bewegung des Fahrzeugs erfassten Messdaten an die XR-Einrichtung übertragen.

Dort erfolgt durch die von der XR-Einrichtung verarbeitete Programmanwendung beim Start des Lokalisierungsalgorithmus eine Differenzbildung zwischen den einerseits durch die interne IMU-Sensorkomponente der XR-Einrichtung erfassten Messdaten und den andererseits durch die mindestens eine externe IMU-Sensoreinrichtung zu den Bewegungszuständen des Fahrzeugs erfassten Messdaten, wodurch das virtuelle Objekt gegenüber dem Fahrzeug hinsichtlich seiner relativen Position und relativen Lage stabilisiert wird. An dieser Stelle sei darauf hingewiesen, dass lediglich aus Gründen der besseren Unterscheitbarkeit im Zusammenhang mit der in (intern) oder an der XR-Einrichtung angeordneten Sensorik von einer IMU-Sensorkomponente gesprochen wird, in Bezug auf die demgegenüber externe Sensorik jedoch von mindestens einer Sensoreinrichtung.

Was die zuvor angesprochene Differenzbildung anbelangt, ist es dabei unerheblich, ob die Messdaten der internen IMU-Sensorkomponente von denen der externen IMU-Sensoreinrichtung abgezogen werden oder umgekehrt. Entscheidend ist nur, dass die Differenzbildung unter Beachtung der jeweiligen Richtung festgestellter Bewegungen vorzeichenrichtig erfolgt und auf das visualisierte virtuelle Objekt angewendet wird. Demnach handelt es sich um eine vektorielle Subtraktion der Messdaten. Auf diese Weise wird das mindestens eine virtuelle Objekt hinsichtlich seiner relativen Position und relativen Lage zum Fahrzeug stabilisiert, um es auf der Darstellungsfläche bezogen auf eventuelle Bewegungen des Nutzer (beispielsweise Drehen des Kopfes) positions- und lagerichtig darzustellen.

Das Verfahren kann beispielsweise mittels einer entsprechenden XR-Brille, also einer nach dem Prinzip der VR, der AR oder der MR arbeitenden elektronischen Brille, ausgeführt werden. An den dem Nutzer beim Tragen der Brille zugewandten Innenseiten der Gläser ist die Darstellungsfläche für das mindestens eine virtuelle Objekt angeordnet, wobei beispielsweise die Innenseiten der Gläser die Darstellungsfläche selbst direkt ausbilden können. Sofern die vorgenannte XR-Brille hardwaremäßig entsprechend ausgestattet ist, nämlich insbesondere eine Verarbeitungseinrichtung für die den Lokalisierungsalgorithmus (beispielsweise SLAM-Algorithmus) ausführende Programmanwendung aufweist, kann diese solitär zur Durchführung des Verfahrens verwendet werden. Wie bereits eingangs ausgeführt, wird es sich jedoch typischerweise bei der zur Durchführung des Verfahrens verwendeten XR-Einrichtung um eine mit einem Companion Device, nämlich mit einem Smartphone oder einem Tablet-PC, zusammenarbeitende XR-Brille handeln. Hierbei wird dann die Darstellungsfläche für das mindestens eine virtuelle Objekt durch die Brillengläser der XR-Brille gebildet, wohingegen die Programmanwendung zur Visualisierung des betreffenden virtuellen Objekts und zur Ausführung des Lokalisierungsalgorithmus durch das genannte, mit der Brille agierende und dafür mit ihr verbundene Companion Device verarbeitet wird. Gegebenenfalls kann das Verfahren aber auch ohne Nutzung einer speziellen Brille ausgeführt werden, nämlich dann, wenn das mindestens eine virtuelle Objekt auf einem als Darstellungsfläche dienenden Display eines durch den Nutzer vor seinen Augen bewegten mobilen Endgeräts (Smartphone oder Tablet-PC) visualisiert wird.

Was die mindestens eine gegenüber der XR-Einrichtung externe IMU-Sensoreinrichtung anbelangt, so sind auch in Bezug auf diese unterschiedliche Konfigurationen und demnach unterschiedliche Möglichkeiten der Implementierung des Verfahrens denkbar. Entsprechend einer insoweit bestehenden Möglichkeit kann es sich bei dieser externen IMU-Sensoreinrichtung um einen Bestandteil eines temporär in dem Fahrzeug fixierten computerbasierten mobilen Endgeräts handeln. Auch hierfür kommt demnach ein mit der XR-Einrichtung interagierendes Smartphone oder ein Tablet-PC in Betracht. Dies gilt auch dann, wenn es sich bei der XR-Einrichtung um die Kombination aus einem Smartphone oder Tablet-PC mit einer XR-Brille handelt. Insoweit ist es sicherlich nicht ausgeschlossen, dass sich eine die erfindungsgemäße Lösung nutzende Person hierfür zweier, sich in ihrem Besitz befindlicher mobiler Endgeräte bedient.

Denkbar ist es aber auch, dass die mindestens eine externe IMU-Sensoreinrichtung als fester Bestandteil eines entsprechend ausgestatteten Fahrzeugs ausgebildet ist. In diesem Fall kann diese externe IMU-Sensoreinrichtung, abweichend von der zuvor dargestellten Möglichkeit, durch eine größere Zahl von sich in einem bewegten Fahrzeug befindender Personen für die Durchführung des Verfahrens genutzt werden. Die betreffende IMU-Sensoreinrichtung kann hierbei in einer Art Broadcast die jeweiligen, von ihr erfassten Messdaten zu den Bewegungszuständen des Fahrzeugs an alle das Verfahren in dem Fahrzeug nutzenden Personen respektive deren XR-Einrichtungen ausgesenden.

Korrespondierend mit dem zuvor beschriebenen Verfahren umfasst ein zu dessen Durchführung geeignetes, die Aufgabe lösendes System zunächst als wesentliches Element eine von einem Nutzer in einem sich bewegenden Fahrzeug genutzte mobile XR-Einrichtung. Diese XR-Einrichtung weist eine Darstellungsfläche für das mindestens eine visualisierte virtuelle Objekt auf. Sie umfasst ferner eine starr mit dieser Darstellungsfläche gekoppelte IMU-Sensorkomponente zur Erfassung Bewegungszustände der Darstellungsfläche beschreibender Messdaten. Darüber hinaus ist die XR-Einrichtung mit einer von ihr verarbeitbaren Programmanwendung ausgestattet. Durch die Verarbeitung dieser Programmanwendung ist die XR-Einrichtung dazu ausgebildet, die Position und die Lage des dargestellten virtuellen Objekts zu stabilisieren. Mit Blick auf das Verfahren ist die die Programmanwendung verarbeitende XR-Einrichtung genauer gesagt dazu ausgebildet, das an deren Darstellungsfläche visualisierte mindestens eine virtuelle Objekt durch Ausführung eines Lokalisierungsalgorithmus, wie eines SLAM-Algorithmus, bezüglich seiner Pose zu stabilisieren.

Neben der wie vorstehend angegeben ausgebildeter XR-Einrichtung umfasst das die Aufgabe lösende System mindestens eine bezüglich der XR-Einrichtung externe, temporär oder permanent in dem Fahrzeug fixierte IMU-Sensoreinrichtung zur Erfassung Bewegungszustände des Fahrzeugs beschreibender Messdaten. Diese mindestens eine externe IMU-Sensoreinrichtung ist dabei dazu ausgebildet, die von ihr erfassten Messdaten an die XR-Einrichtung eines sich in dem Fahrzeug befindenden Nutzers des Verfahrens zu übertragen.

Die XR-Einrichtung ihrerseits ist durch die von ihr verarbeitete Programmanwendung ferner dazu ausgebildet, beim Starten des Lokalisierungsalgorithmus eine Differenzbildung zwischen den Messdaten der internen IMU-Sensorkomponente der XR-Einrichtung und den Messdaten der externen IMU-Sensoreinrichtung in dem Fahrzeug durchzuführen. Durch die von ihr verarbeitete, den Lokalisierungsalgorithmus beginnend mit der zuvor angegebenen Differenzbildung ausführende Programmanwendung ist die XR-Einrichtung also dazu ausgebildet, die Pose des mindestens einen virtuellen Objekts gegenüber dem Fahrzeug zu stabilisieren respektive Bewegungen des Fahrzeugs gewissermaßen zu kompensieren.

Anhand von Zeichnungen soll die vorgestellte Lösung nochmals veranschaulicht werden. Die Zeichnungen zeigen im Einzelnen:
- Fig. 1:: eine mögliche Konfiguration gemäß der erfindungsgemäßen Lösung,
- Fig. 2:: eine vergleichbare Konfiguration gemäß dem Stand der Technik.

Gleiche Bezugszeichen bezeichnen in beiden Figuren jeweils gleiche Elemente.

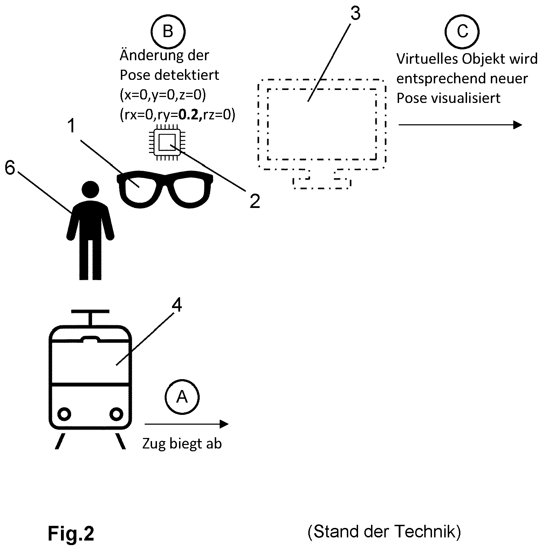

Zunächst soll anhand der Fig. 2 auf den Stand der Technik bei der Darstellung virtueller Objekte 3 mittels einer XR-Einrichtung 1, vorliegend mittels einer XR-Brille, eingegangen werden. Die Zeichnung veranschaulicht dabei eine entsprechende Konfiguration und sich bei deren Nutzung vollziehende Abläufe in einer groben schematische Darstellung. Demnach wird ein virtuelles Objekt 3 - im Beispiel ein virtuelles Bildschirmgerät - auf der Innenseite der Gläser einer von einem Nutzer getragenen XR-Brille (XR-Einrichtung 1) visualisiert. Das betreffende Objekt 3, also das virtuelle Bildschirmgerät, wird auf der durch die Brillengläser ausgebildeten Darstellungsfläche zunächst an einer ersten initialen Position in einer bestimmten Ausrichtung dargestellt.

Bewegt nun der die XR-Brille tragende Nutzer 6 seinen Kopf beispielsweise zur Seite, so verändert das virtuelle Objekt zur Erzeugung eines realitätsnahen Eindrucks seine Position und seine Lage auf der Darstellungsfläche. Und zwar bis dahin, dass das Objekt gegebenenfalls, bei entsprechend starker Bewegung des Kopfes des die XR-Brille (XR-Einrichtung 1) tragenden Nutzers 6 aus dessen Sichtbereich, das heißt von der Darstellungsfläche der XR-Brille verschwindet. Erreicht wird dieses Verhalten mittels einer als Bestandteil der XR-Brille respektive die XR-Einrichtung 1 ausgebildeten IMU-Sensorkomponente 2, also mit Hilfe einer sensorischen Einheit, welche die durch die Bewegung des Kopfes des Nutzers 6 erfolgende Beschleunigung und die Winkelgeschwindigkeit der XR-Brille (XR-Einrichtung 1) erfasst. Die, das Bewegungsverhalten der XR-Brille beschreibenden Messdaten der IMU-Sensorkomponente 2 fließen in einen Lokalisierungsalgorithmus ein, welcher durch eine von einer Zentralverarbeitungseinheit (CPU, nicht gezeigt) der XR-Einrichtung 1 - vorliegend sei angenommen, dass die XR-Brille entsprechend ausgestattet, also die genannte CPU integraler Bestandteil der XR-Brille ist - verarbeitete Programmanwendung ausgeführt wird.

Die dargestellte Konfiguration stößt jedoch bei ihrer Nutzung in einem sich bewegenden Fahrzeug 4 an ihre Grenzen. Dies rührt daher, dass die IMU-Sensorkomponente der XR-Brille hinsichtlich des Bewegungsverhaltens der Brille absolute Messdaten, also die absolute Beschleunigung der Brille und deren jeweilige absolute Winkelgeschwindigkeit, erfasst. Jedoch können die solchermaßen erfassten Messdaten auch dadurch hervorgerufen werden, dass zwar der die Brille tragende Nutzer seinen Kopf nicht bewegt, aber das Fahrzeug 4 seine Bewegungsrichtung (A) und die Geschwindigkeit ändert. Der durch die CPU der XR-Brille ausgeführte Lokalisierungsalgorithmus führt dann zu falschen Ergebnissen, so dass eine realitätsnahe Stabilisierung der Pose des von dieser visualisierten virtuellen Objekts nicht mehr gegeben ist. Aufgrund der gemäß Bewegungsänderung des Fahrzeugs 4 - Beispiel der Zug biegt ab (A) - wird eine Änderung (B) der Pose erkannt, die aber eigentlich nicht zutreffend ist, da der Nutzer selbst sich beispielsweise gar nicht bewegt respektive seine Kopfhaltung nicht verändert hat. Dennoch wird das an den Innenseiten der Gläser der XR-Brille visualisierte virtuelle Objekt entsprechend dieser detektierten neuen Pose visualisiert (C), erscheint also an einer anderen (falschen) Position auf der Darstellungsfläche.

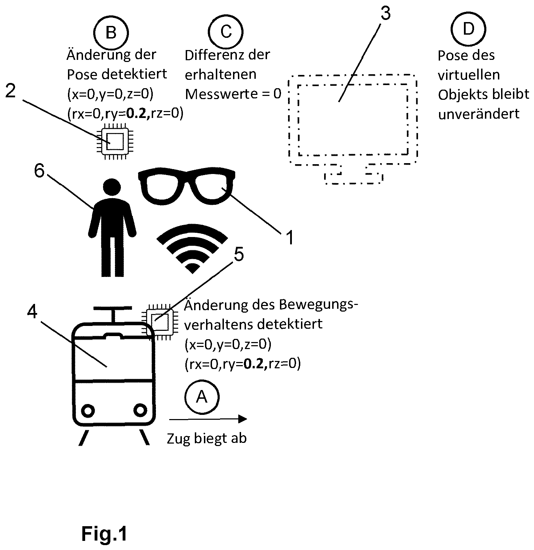

Dem vorstehend nochmals dargestellten Problem wird dadurch begegnet, dass bei der erfindungsgemäßen Lösung, wie durch das in der Fig. 1 gegebene Beispiel veranschaulicht, in dem von der CPU verarbeiteten Lokalisierungsalgorithmus zusätzliche Eingangsdaten einfließen. Es handelt sich hierbei um das Bewegungsverhalten des Fahrzeugs 4 selbst beschreibende Messdaten, welche durch eine externe, zumindest temporär in dem Fahrzeug 4 fixierte IMU-Sensoreinrichtung 5 erfasst werden. Durch Differenzbildung (C) zwischen den von der internen IMU-Sensorkomponente 2 erfassten Messdaten und den von der externen IMU-Sensoreinrichtung 5 erfassten Messdaten und die Verwendung des daraus resultierenden Ergebnisses für den Lokalisierungsalgorithmus (zum Beispiel SLAM-Algorithmus) wird wieder eine gute Stabilisierung der Pose des von der XR-Brille (XR-Einrichtung 1) dargestellten virtuellen Objekts 3 erreicht, welche sich in dem hier angenommenen Fall, dass sich der Nutzer 6 selbst nicht bewegt respektive der Nutzer 6 seinen Kopf nicht bewegt, nicht verändert (D).

## Patentansprüche

1. Verfahren zur verbesserten Darstellung mindestens eines virtuellen Objekts (3) durch eine von einem Nutzer (6) in einem sich bewegenden Fahrzeug (4) genutzte mobile XR-Einrichtung (1), indem ein durch die XR-Einrichtung (1) visualisiertes virtuelles Objekt (3) hinsichtlich der Position und Lage mithilfe einer durch die XR-Einrichtung (1) verarbeiteten Programmanwendung nach einem Lokalisierungsalgorithmus, wie einem SLAM-Algorithmus, das heißt einem Simultaneous Localization and Mapping Algorithm, stabilisiert wird, für welchen als Eingangsgrößen fortlaufend mittels mindestens einer starr mit einer Darstellungsfläche, nämlich einer zur Darstellung des virtuellen Objekts (3) genutzten Fläche der XR-Einrichtung (1), gekoppelten IMU-Sensorkomponente (2) erfasste, Bewegungszustände der Darstellungsfläche beschreibende Messdaten verwendet werden, **dadurch gekennzeichnet, dass** als Eingangsgrößen für den Lokalisierungsalgorithmus zusätzlich mit den Messdaten der IMU-Sensorkomponente (2) korrespondierende Messdaten zu Bewegungszuständen des Fahrzeugs (4) verwendet werden, welche mittels mindestens einer externen, temporär oder permanent in dem Fahrzeug (4) fixierten IMU-Sensoreinrichtung (5) erfasst und an die zu ihrem Empfang ausgebildete XR-Einrichtung (1) übertragen werden, und dass durch die von der XR-Einrichtung (1) verarbeitete Programmanwendung beim Start des Lokalisierungsalgorithmus eine Differenzbildung zwischen den Messdaten der IMU-Sensorkomponente (2) der XR-Einrichtung (1) und den Messdaten der mindestens einen IMU-Sensoreinrichtung (5) erfolgt, so dass das virtuelle Objekt (3) gegenüber dem Fahrzeug (4) hinsichtlich seiner relativen Position und relativen Lage stabilisiert wird.

2. Verfahren nach Anspruch 1, wobei zur Darstellung des mindestens einen virtuellen Objekts (3) als XR-Einrichtung (1) eine XR-Brille verwendet wird, bei welcher die Darstellungsfläche auf den einem die XR-Brille tragenden Nutzer zugewandten Innenseiten der Brillengläser angeordnet ist.

3. Verfahren nach Anspruch 2, **dadurch gekennzeichnet, dass** die den Lokalisierungsalgorithmus ausführende Programmanwendung durch ein gemeinsam mit der XR-Brille die XR-Einrichtung (1) ausbildendes computerbasiertes mobiles Endgerät verarbeitet wird.

4. Verfahren nach Anspruch 1, wobei als XR-Einrichtung (1) ein Smartphone oder ein Tablet-PC und als Darstellungsfläche ein Display dieses computerbasierten Endgeräts verwendet wird.

5. Verfahren nach einem der Ansprüche 1 bis 4, **dadurch gekennzeichnet, dass** zur Erfassung der Messdaten zu Bewegungszuständen des Fahrzeugs (4) mindestens eine als Teil eines temporär in dem Fahrzeug (4) fixierten, computerbasierten mobilen Endgeräts ausgebildete IMU-Sensoreinrichtung (5) verwendet wird.

6. System zur verbesserten Darstellung mindestens eines virtuellen Objekts (3) durch eine von einem Nutzer (6) in einem sich bewegenden Fahrzeug (4) genutzte mobile XR-Einrichtung (1), mit
- einer Darstellungsfläche für das mindestens eine visualisierte virtuelle Objekt (3);
- einer von der XR-Einrichtung umfassten, starr mit deren Darstellungsfläche gekoppelten IMU-Sensorkomponente (2) zur Erfassung Bewegungszustände der Darstellungsfläche beschreibender Messdaten;
- einer von der XR-Einrichtung (1) verarbeitbaren Programmanwendung, durch deren Verarbeitung die XR-Einrichtung (1) dazu ausgebildet ist, die Position und die Lage des dargestellten virtuellen Objekts (3) nach einem Bewegungszustände der Darstellungsfläche beschreibende Messdaten der IMU-Sensorkomponente (2) als Eingangsgrößen verwendenden Lokalisierungsalgorithmus, wie einem SLAM-Algorithmus, das heißt einem Simultaneous Localization and Mapping Algorithm, zu stabilisieren,
**dadurch gekennzeichnet, dass**
a.) das System neben der XR-Einrichtung (1) und deren IMU-Sensorkomponente (2) mindestens eine bezüglich der XR-Einrichtung (1) externe, temporär oder permanent in dem Fahrzeug (4) fixierte IMU-Sensoreinrichtung (5) zur Erfassung Bewegungszustände des Fahrzeugs (4) beschreibender Messdaten umfasst, welche dazu ausgebildet ist diese Messdaten an die XR-Einrichtung (1) zu übertragen,
b.) die XR-Einrichtung (1) durch die von ihr verarbeitete Programmanwendung, dazu ausgebildet ist, beim Start des Lokalisierungsalgorithmus eine Differenzbildung zwischen den Messdaten der mindestens einen IMU-Sensorkomponente (2) der XR-Einrichtung (1) und den von der IMU-Sensoreinrichtung (5) empfangenen Messdaten durchzuführen.

7. System nach Anspruch 6, **dadurch gekennzeichnet, dass** es sich bei der XR-Einrichtung (1) um eine XR-Brille handelt, bei welcher die Darstellungsfläche auf den einem die XR-Brille tragenden Nutzer (6) zugewandten Innenseiten der Brillengläser angeordnet ist.

8. System nach Anspruch 6, **dadurch gekennzeichnet, dass** es sich bei der XR-Einrichtung (1) um ein computerbasiertes Endgerät, wie ein Smartphone oder einen Tablet-PC handelt, wobei ein Display dieses Endgeräts die Darstellungsfläche für das mindestens eine virtuelle Objekt (3) ausbildet.

9. System nach Anspruch 6, **dadurch gekennzeichnet, dass** es sich bei der XR-Einrichtung (1) um eine mit einem mobilen, computerbasierten Endgerät, wie einem Smartphone oder einem Tablett-PC, verbundene XR-Brille handelt, wobei die Darstellungsfläche auf den einem die XR-Brille tragenden Nutzer (6) zugewandten Innenseiten der Brillengläser der XR-Brille angeordnet und das computerbasierte Endgerät mit der den Lokalisierungsalgorithmus ausführenden Programmanwendung ausgestattet sowie zu deren Verarbeitung ausgebildet ist.

10. System nach einem der Ansprüche 6 bis 9, **dadurch gekennzeichnet, dass** es sich bei der gegenüber der XR-Einrichtung (1) externen IMU-Sensoreinrichtung um einen Bestandteil eines temporär in dem Fahrzeug (4) fixierten, computerbasierten mobilen Endgeräts handelt.

11. System nach einem der Ansprüche 6 bis 9, **dadurch gekennzeichnet, dass** es sich bei der IMU-Sensoreinrichtung (5) um eine in dem Fahrzeug (4) fest verbaute Einrichtung handelt.
